# EUROPÄISCHE PATENTSCHRIFT

(11) **EP 4 122 779 B1**
(45) Veröffentlichungstag und Bekanntmachung des Hinweises auf die Patenterteilung: **26.02.2025**
(21) Anmeldenummer: 22184135.6
(22) Anmeldetag: 11.07.2022
(51) Int. Cl.: B60R 22/34, F16F 9/22, B60R 22/28

(54) **FLUIDDÄMPFER ZUR MODULIERUNG EINER RÜCKHALTEKRAFT EINES SICHERHEITSGURTES**
FLUID DAMPER FOR MODULATING A RETAINING FORCE OF A SAFETY BELT
AMORTISSEUR À FLUIDE DESTINÉ À LA MODULATION D'UNE FORCE DE RETENUE D'UNE CEINTURE DE SÉCURITÉ

(30) Priorität: 12.07.2021 DE 102021117898
(43) Veröffentlichungstag der Anmeldung: 25.01.2023
(60) Teilanmeldung: 23199499.7
(73) Patentinhaber: STABILUS GmbH, 56070 Koblenz (DE)
(72) Erfinder: Piroth, Raphael, 56077 Koblenz (DE); Löhken, Lars, 53545 Linz (DE); Müller, Markus, 56072 Koblenz (DE); Probst, Ulrich, 56204 Hillscheid (DE); Junghans, Christian, 47167 Duisburg (DE)
(74) Vertreter: Bernsmann, Falk

(56) Entgegenhaltungen:
- EP-B1- 2 951 459
- DE-A1- 102019 208 718
- DE-A1- 2 517 539
- US-A- 3 343 874
- US-A- 3 750 856

## Beschreibung

### Technisches Gebiet

Die Erfindung betrifft einen Fluiddämpfer zur Modulierung einer Rückhaltekraft eines Sicherheitsgurtes. Der Fluiddämpfer umfasst einen Außenzylinder und einen in dem Außenzylinder koaxial zu einer gemeinsamen Längsachse angeordneten Innenzylinder umfasst, wobei der Innenzylinder einen mit einem Dämpffluid gefüllten Innenraum umschließt, wobei der Fluiddämpfer einen in dem Innenraum entlang der Längsachse entlang einer Hubstrecke verschieblichen Kolben umfasst wobei der Fluiddämpfer zumindest eine Leitung umfasst, und wobei die zumindest eine Leitung eine entlang der Längsachse vor dem Kolben liegende vordere Fluidkammer für das Dämpffluid leitend mit einer entlang der Längsachse hinter dem Kolben liegenden hinteren Fluidkammer verbindet.

Die Erfindung betrifft ferner einen Gurtkraftbegrenzer umfassend den Fluiddämpfer.

### Stand der Technik

In modernen Fahrzeugen greifen im Crashfall zum Schutz der Insassen verschiedene Sicherheitssysteme. Dazu zählen z. B. Gurtstraffer, Airbag oder Gurtkraftbegrenzer. Dabei sorgt zuerst der Gurtstraffer dafür, dass ein eventuell zu lose angelegter Gurt mit Vorspannung am Insassen anliegt. Um die Schulterpartie des Insassen zu schützen und dabei gleichzeitig die maximale Wirkung des Airbags auszunutzen, sorgt der Gurtkraftbegrenzer dafür, dass der Insasse gezielt nach einer bestimmten Zeit und einem bestimmten Weg mit dem Kopf auf den Airbag auftrifft und eine kritische Last auf die Schulterpartie nicht überschritten wird, indem die Rückhaltekraft, mit der der Gurt den Insassen zurückhält, begrenzt wird.

Bekannte Systeme reagieren dabei nicht oder nur unter Einflussnahme zusätzlicher Sensorik auf unterschiedliche Insassengewichte, sodass die Rückhaltekraft nicht optimal an das Insassengewicht oder eine Aufprallgeschwindigkeit des Fahrzeugs angepasst ist. Es kann daher passieren, dass ein schwerer Insasse bei einer hohen Aufprallgeschwindigkeit durch eine zu geringe Rückhaltekraft vor dem Aufprall auf den Airbag nicht ausreichend abgebremst wird, oder dass eine leichte Insassin bei einer geringen Aufprallgeschwindigkeit mit einer für ihre Schulterpartie zu hohen Rückhaltekraft zurückgehalten wird. In beiden Fällen können schwere Verletzungen die Folge sein.

Die Patentanmeldung DE10113502A1 beschreibt einen Gurtaufroller mit einem hydraulischen Gurtkraftbegrenzer. Beispielsweise bewegt die Spindel des Gurtaufrollers eine Mutter mit Drosselbohrungen durch einen mit einem Hydraulikfluid gefüllten Hohlraum. Durch die Verwendung eines hydraulischen Kraftbegrenzers ist die Abwicklungslänge des Sicherheitsgurts laut DE10113502A1 unabhängig von der Aufprallgeschwindigkeit des Kraftfahrzeugs. DE101 13502A1 löst aber nicht das Problem, dass die Abwicklungslänge von der Masse der gesicherten Person abhängt.

Die Patentanmeldung DE102012004603A1 beschreibt eine Gurtspule mit einem Kraftbegrenzer, der einen Verdrängungskörper enthält, der sich in einem Granulat bewegt. Laut DE102012004603A1 führt die Verwendung eines Granulats dazu, dass sich der vom Kraftbegrenzer erzeugte Widerstand mit zunehmender Auszugsgeschwindigkeit des Sicherheitsgurts erhöht, sodass sich unabhängig von der Masse der zurückgehaltenen Person die gleiche Vorverlagerung ergibt.

Das Gebrauchsmuster DE29880147U1 beschreibt ein Fahrzeuginsassen-Rückhaltesystem, das eine Lastbegrenzung selbsttätig an die Masse der zurückgehaltenen Person anpasst, indem die Rückhaltekraft von der Verschiebung der Person abhängig ausgestaltet ist. Dafür umfasst das Rückhaltesystem beispielsweise eine Kolben-Zylinder-Einrichtung mit einem Zylinder, der scherbare oder zusammendrückbare Innenrippen aufweist, deren Breite längs des Zylinders zunimmt. Dadurch bewirken die Rippen einen längs des Zylinders zunehmenden Bewegungswiderstand auf den Kolben. Dadurch erfährt eine leichte Person, die nur eine geringe Verschiebung des Kolbens bewirkt, eine geringere Rückhaltekraft als eine schwere Person. Nachteilig an diesem Konzept ist aber, dass der Hub der Kolben-Zylinder-Einrichtung nicht optimal ausgenutzt wird und das ein ungleichmäßiger Verlauf der Rückhaltekraft mit hohen Maxima entsteht.

Die Patentanmeldung DE2517539A1 beschreibt eine mechanische, geradlinig wirkende Vorrichtung zum plötzlichen Anspannen und nachgebenden Dämpfen, geeignet als Schutzvorrichtung an Sicherheitsgurten. Die Patentanmeldung US3750856A beschreibt einen einstellbaren und druckkompensierenden Stoßdämpfer. Die Patentanmeldung EP2951459A1 offenbart einen Stoßdämpfer mit variablem Dämpfungsprofil.

Die bekannten Systeme zur Anpassung der Rückhaltekraft bieten nur eine begrenzte Anpassung an die Insassenmasse, sind kompliziert aufgebaut und/oder stellen nicht sicher, dass der Insasse über die zur Verfügung stehende Bremsstrecke zwischen Sitz und Airbag gleichmäßig abgebremst wird, sodass es zu Belastungsspitzen des Insassen kommt, die Verletzungen verursachen können.

### Technische Aufgabe

Die Aufgabe der Erfindung ist es, eine möglichst kostengünstige, einfach aufgebaute und langlebige Vorrichtung bereitzustellen, die eine an ein Insassengewicht eines Insassens und/oder eine Aufprallgeschwindigkeit eines Fahrzeugs angepasste Abbremsung des Insassens durch einen Sicherheitsgurt ermöglicht.

### Technische Lösung

Der Gegenstand der vorliegenden Erfindung stellt einen Fluiddämpfer gemäß Anspruch 1 bereit, der die technische Aufgabe löst. Ebenso wird die Aufgabe durch einen Gurtkraftbegrenzer gemäß Anspruch 8 gelöst. Vorteilhafte Ausgestaltungen ergeben sich aus den abhängigen Ansprüchen.

Ein erfindungsgemäßer Fluiddämpfer ist zur Modulierung einer Rückhaltekraft eines Sicherheitsgurtes ausgelegt. Der Fluiddämpfer kann auch für andere Anwendungen eingesetzt werden, beispielsweise als selbsteinstellender Anschlagdämpfer, dessen Dämpfkraft sich selbsttätig an die Aufprallenergie eines auf den Anschlagdämpfer aufprallenden Objekts, beispielsweise einer Klappe eines Fahrzeugs, anpasst.

Der Fluiddämpfer umfasst einen Außenzylinder und einen in dem Außenzylinder koaxial zu einer gemeinsamen Längsachse angeordneten Innenzylinder, wobei der Innenzylinder einen mit einem Dämpffluid gefüllten Innenraum umfasst. Der Außenzylinder und der Innenzylinder bilden zusammen einen Zylinder des Fluiddämpfers. Das Dämpffluid ist beispielsweise eine Dämpfflüssigkeit, insbesondere ein Hydrauliköl. Der Außenzylinder und der Innenzylinder haben vorzugsweise jeweils im Wesentlichen die Form eines Hohlzylinders.

Der Fluiddämpfer umfasst einen in dem Innenraum entlang der Längsachse , insbesondere von einem hinteren Endbereich einer Hubstrecke zu einem vorderen Endbereich der Hubstrecke und vorzugsweise auch umgekehrt, verschieblichen Kolben. Der Kolben ist vorzugsweise zu der Längsachse rotationssymmetrisch.

Der Kolben ist beispielsweise an einer Kolbenstange befestigt, die entlang der Längsachse aus dem Außenzylinder und dem Innenzylinder herausgeführt ist. Die Kolbenstange und der Außenzylinder und/oder Innenzylinder können Kopplungselemente zur Kopplung der Kolbenstange an den Sicherheitsgurt und zur Kopplung des Zylinders an einen Sitz oder eine Karosserie eines Fahrzeugs oder umgekehrt aufweisen. Dadurch kann der Kolben durch eine Ausziehbewegung des Sicherheitsgurtes relativ zu dem Sitz oder zu der Karosserie in dem Innenraum entlang der Hubstrecke verschoben werden. Dabei wird die Ausziehbewegung von einer Dämpfkraft des Fluiddämpfers gedämpft.

Der Fluiddämpfer umfasst zumindest eine Leitung, wobei die zumindest eine Leitung eine entlang der Längsachse vor dem Kolben liegende vordere Fluidkammer für das Dämpffluid leitend mit einer entlang der Längsachse hinter dem Kolben liegenden hinteren Fluidkammer verbindet. Im erstgenannten Fall bildet die zumindest eine Leitung für das Dämpffluid einen Bypass, durch den das Dämpffluid um den Kolben herum von der vorderen Fluidkammer in die hintere Fluidkammer und umgekehrt strömen kann.

Der Kolben teilt den Innenraum vorzugsweise, insbesondere für das Dämpffluid dichtend, in die vordere Fluidkammer entlang der Längsachse vor dem Kolben und die hintere Fluidkammer entlang der Längsachse hinter dem Kolben.

Wenn der Kolben durch die Ausziehbewegung des Sicherheitsgurtes entlang der Hubstrecke verschoben wird, strömt das Dämpffluid durch die zumindest eine Leitung von der vorderen Fluidkammer in die hintere Fluidkammer oder umgekehrt. Daher wird eine Dämpfkraft, mit der der Fluiddämpfer die Ausziehbewegung dämpft, im Wesentlichen durch einen Strömungswiderstand bestimmt, der der Strömung des Dämpffluides durch die zumindest eine Leitung entgegenwirkt.

Die zumindest eine Leitung umfasst vorzugsweise einen äußeren Leitungsteil in dem Außenzylinder und einen inneren Leitungsteil in dem Innenzylinder. Damit der innere Leitungsteil zusammen mit dem äußerem Leitungsteil als Leitung für das Dämpffluid zusammenwirken, haben der innere Leitungsteil und der äußere Leitungsteil entlang der Mantelflächen des Außenzylinders und des Innenzylinders eine Überdeckung. Als Überdeckung der Leitungsteile wird die Überdeckung der Leitungsteile an der Grenzfläche zwischen dem inneren Leitungsteil und dem äußeren Leitungsteil bezeichnet.

Eine äußere Mantelfläche des Innenzylinders liegt vorzugsweise an einer inneren Mantelfläche des Außenzylinders für das Dämpffluid dichtend an. Der Innenzylinder ist also so in dem Außenzylinder angeordnet, dass das Dämpffluid nicht zwischen Innenzylinder und Außenzylinder hindurchtreten kann.

Der Innenzylinder ist vorzugsweise durch eine Kraft, die entlang der Längsachse auf den Kolben wirkt, relativ zu dem Außenzylinder aus einer Ruheposition auslenkbar, sodass die Auslenkung des Innenzylinders eine von dem Betrag der Kraft abhängige Einstellung einer Überdeckung des äußeren Leitungsteils mit dem inneren Leitungsteil entlang der Mantelflächen bewirkt. Bei der Auslenkung kann es sich um eine lineare Auslenkung entlang der Längsachse und/oder um eine drehende Auslenkung um die Längsachse handeln. Bezogen auf eine Umgebung des Fluiddämpfers kann sich durch die Auslenkung der Innenzylinder und/oder der Außenzylinder bewegen. Für einen konstruktiv einfachen Aufbau des Fluiddämpfers bewegt sich bezogen auf die Umgebung bevorzugt nur der Innenzylinder.

Der Strömungswiderstand des Dämpffluides durch die Leitung und die sich daraus ergebende Dämpfkraft des Fluiddämpfers steigen mit sinkender Überdeckung der Leitungsteile. Daher bewirkt die Auslenkung des Innenzylinders eine vom Betrag der auf den Kolben wirkenden Kraft abhängige, selbsttätige Einstellung der Dämpfkraft des Fluiddämpfers.

Die Überdeckung kann beispielsweise in der Ruheposition maximal sein, wenn keine oder nur eine geringe Kraft auf den Kolben wirkt, und abnehmen, wenn der Innenzlinder mit zunehmender Kraft aus der Ruheposition ausgelenkt wird. Die auf den Kolben wirkende Kraft bewirkt durch die Auslenkung des Innenzylinders in dieser Ausgestaltung, dass sich mit steigender Kraft auf den Kolben die Dämpfkraft des Fluiddämpfers selbsttätig erhöht. Das heißt, wenn ein Insasse durch seine hohe Masse oder durch eine hohe Aufprallgeschwindigkeit eine große Kraft auf den Sicherheitsgurt und dadurch auf den Kolben ausübt, wird der Insasse durch eine höhere Dämpfkraft zurückgehalten als ein leichterer Insasse oder ein Insasse bei einem Unfall mit geringer Aufprallgeschwindigkeit. Die Dämpfkraft passt sich also selbsttätig an die Masse des Insassen und an die Aufprallgeschwindigkeit an, sodass einerseits eine Belastung des Insassen durch den Sicherheitsgurt möglichst gering gehalten werden kann, und andererseits die Rückhaltekraft hoch genug ist, damit der Insasse nicht mit zu hoher Bewegungsenergie auf den Airbag auftrifft.

### Beschreibung der Ausführungsarten

Der Innenzylinder ist vorzugsweise durch die Kraft, die entlang der Längsachse auf den Kolben wirkt, entlang der Längsachse aus der Ruheposition linear auslenkbar, sodass die lineare Auslenkung des Innenzylinders eine von dem Betrag der Kraft abhängige Einstellung der Überdeckung des äußeren Leitungsteils mit dem inneren Leitungsteil entlang der Mantelflächen bewirkt.

Wenn die entlang der Längsachse wirkende Kraft den Innenzylinder entlang der Längsachse auslenkt, hat das den Vorteil, dass die Kraft nicht in eine andere Richtung umgelenkt werden muss, sodass der Fluiddämpfer besonders einfach aufgebaut sein kann.

Eine maximale Auslenkung des Innenzylinders ist vorzugsweise wesentlich kleiner als die Länge der Hubstrecke, sodass sich die Auszugsstrecke des Sicherheitsgurtes durch die Auslenkung nicht wesentlich ändert.

Der Fluiddämpfer umfasst vorzugsweise ein Federelement. Das Federelement umfasst beispielsweise eine Schraubendruckfeder.

Das Federelement wirkt der Auslenkung des Innenzylinders relativ zu dem Außenzylinder aus der Ruheposition entgegen. Die Federkraft und/oder Federkennlinie des Federelements bestimmt somit den Zusammenhang zwischen dem Betrag der auf den Kolben wirkenden Kraft und der Auslenkung des Innenzylinders und somit der Dämpfkraft des Fluiddämpfers. Durch die Auswahl eines geeigneten Federelements kann somit eingestellt werden, wie die Dämpfkraft des Fluiddämpfers auf die auf den Kolben wirkende Kraft reagiert. Bei ansonsten gleicher Ausgestaltung kann der Fluiddämpfer somit auf einfache Weise durch den Austausch des Federelements an unterschiedliche Anforderungen angepasst werden.

Das Federelement spannt den Innenzylinder vorzugsweise, insbesondere entlang der Längsachse, relativ zu dem Außenzylinder in die Ruheposition vor. Die Vorspannung stellt sicher, dass der Innenzylinder nicht schon durch kleine Kräfte ungewollt ausgelenkt wird, was zu einer Fehlfunktion des Fluiddämpfers führen könnte.

Der Innenzylinder ist vorzugsweise durch eine Verschiebung des Kolbens, die entlang der Längsachse relativ zu dem Außenzylinder erfolgt, relativ zu dem Außenzylinder beweglich, beispielsweise entlang der Längsachse linear beweglich oder um die Längsachse drehend beweglich, sodass die Bewegung des Innenzylinders eine von der Position des Kolbens auf der Hubstrecke abhängige Einstellung der Überdeckung des äußeren Leitungsteils mit dem inneren Leitungsteil entlang der Mantelflächen bewirkt. Bezogen auf eine Umgebung des Fluiddämpfers kann sich durch die Bewegung der Innenzylinder und/oder der Außenzylinder bewegen. Für einen konstruktiv einfachen Aufbau des Fluiddämpfers bewegt sich bezogen auf die Umgebung bevorzugt nur der Innenzylinder.

Der Strömungswiderstand des Dämpffluides durch die Leitung und die sich daraus ergebende Dämpfkraft des Fluiddämpfers steigen mit sinkender Überdeckung der Leitungsteile. Daher bewirkt die Bewegung des Innenzylinders eine von der Position des Kolbens auf der Hubstrecke abhängige, selbsttätige Einstellung der Dämpfkraft des Fluiddämpfers.

Der äußere Leitungsteil und der innere Leitungsteil haben vorzugsweise eine geringere Überdeckung, wenn sich der Kolben in einem der beiden Endbereiche der Hubstrecke befindet, als wenn sich der Kolben in einem zwischen den Endbereichen liegenden Zentralbereich der Hubstrecke befindet. Die Bewegung des Innenzylinders bewirkt in dieser Ausgestaltung, dass der Strömungswiderstand des Dämpffluids durch die Leitung in einem Zustand, in dem sich der Kolben in den Endbereichen befindet, erhöht wird gegenüber einem Zustand, in dem sich der Kolben in dem Zentralbereich befindet.

Bei einem Unfall steigt die Ausziehgeschwindigkeit des Sicherheitsgurts zunächst stark an und fällt dann aufgrund der Rückhaltekraft des Sicherheitsgurtes sowie gegebenenfalls durch Kontakt des Insassens mit dem Airbag wieder ab bis zum vollständigen Stillstand der Ausziehbewegung. Aufgrund der Fluiddynamik würde die Dämpfkraft eines an den Sicherheitsgurt gekoppelten Fluiddämpfers aus dem Stand der Technik ebenfalls mit der Ausziehgeschwindigkeit zunächst stark ansteigen und dann wieder abfallen. Dadurch könnte es in einem Zentralbereich der Ausziehbewegung zu einer zu hohen Belastung des Insassen durch eine zu hohe Rückhaltekraft des Sicherheitsgurtes kommen.

Wenn die Überdeckung der Leitungsteile kleiner ist, wenn sich der Kolben in den beiden Endbereichen befindet, als wenn sich der Kolben in dem Zentralbereich befindet, wird dadurch ein zu hoher Anstieg der Dämpfkraft mit der Ausziehgeschwindigkeit des Sicherheitsgurtes in dem Zentralbereich verhindert.

Die Überdeckung der Leitungsteile ändert sich abhängig von der Position des Kolbens auf der Hubstrecke vorzugsweise stetig, um eine gleichmäßige Belastung des Insassen zu gewährleisten.

Der Verlauf der Überdeckung der Leitungsteile abhängig von der Position des Kolbens auf der Hubstrecke ist vorzugsweise so gewählt, dass die Dämpfkraft des Fluiddämpfers bei einem erwarteten Verlauf der Ausziehgeschwindigkeit über die Hubstrecke konstant ist. Dazu ist der Verlauf der Überdeckung abhängig von der Position des Kolbens auf der Hubstrecke beispielsweise proportional zum Verlauf der Ausziehgeschwindigkeit abhängig von der Position des Kolbens auf der Hubstrecke.

Vorzugsweise ist die Überdeckung der Leitungsteile vollständig, wenn sich der Kolben in dem Zentralbereich befindet, und/oder die Leitungsteile haben keine Überdeckung miteinander, wenn sich der Kolben in einem der Endbereiche befindet. Dadurch wird eine besonders hohe Variabilität der Überdeckung erreicht, sodass auch bei einer Ausziehgeschwindigkeit mit hoher Variabilität eine konstante Dämpfkraft erreicht werden kann.

Wenn die Leitungsteile keine Überdeckung haben, kann das Dämpfungsfluid nicht durch die Leitung aus der vorderen Fluidkammer in die hintere Fluidkammer oder umgekehrt strömen. Das heißt, wenn der Fluiddämpfer keine weiteren Leitungen für das Dämpffluid umfasst, die die vordere Fluidkammer mit der hinteren Fluidkammer verbinden, kann der Kolben im Zustand nicht vorhandener Überdeckung nur verschoben werden, indem er das Dämpffluid in Verschiebungsrichtung vor dem Kolben komprimiert.

Der Innenzylinder ist vorzugsweise durch die Verschiebung des Kolbens relativ zu dem Außenzylinder um die Längsachse drehend beweglich, sodass die drehende Bewegung des Innenzylinders eine von der Position des Kolbens auf der Hubstrecke abhängige Einstellung der Überdeckung des äußeren Leitungsteils mit dem inneren Leitungsteil entlang der Mantelflächen bewirkt.

Eine Drehung des Innenzylinders relativ zu dem Außenzylinder hat den Vorteil, dass sie ohne gegenseitige Beeinflussung mit einer Verschiebung des Innenzylinders relativ zu dem Außenzylinder entlang der Längsachse zur Anpassung der Dämpfkraft an eine Masse des Insassen oder eine Aufprallgeschwindigkeit kombiniert werden kann.

Der Innenzylinder ist vorzugsweise von dem Kolben über eine Kulissenführung relativ zu dem Außenzylinder um die Längsachse drehbar. Insbesondere kann eine Drehung des Innenzylinders relativ zu dem Außenzylinder durch einen Vorsprung des Kolbens, der in eine Führungsnut des Innenzylinders eingreift, bewirkt werden.

Die zumindest eine Leitung umfasst oder ist eine Nut in der Mantelwand des Innenzylinders und des Außenzylinders zur Leitung des Dämpfungsfluides an dem Kolben vorbei aus der vorderen Fluidkammer in die hintere Fluidkammer. Die Nut hat den Vorteil, dass das Dämpffluid innerhalb des Zylinders bleiben kann, sodass außerhalb des Zylinders keine Teile der Leitung und kein Reservoir für das Dämpffluid notwendig sind. Dadurch kann der Fluiddämpfer besonders platzsparend aufgebaut sein.

Die Mantelwand kann mehrere entlang der Längsachse und/oder in Umfangsrichtung um die Längsachse voneinander beabstandete Nuten umfassen. Vorzugsweise umfasst die Mantelwand genau eine Nut, weil dadurch der Zylinder besonders einfach herstellbar ist, und ein besonders gleichmäßiger Verlauf der Rückhaltekraft des Sicherheitsgurtes erreicht werden kann.

Im Sinne der Erfindung wird sowohl eine Vertiefung in einem Bauteil mit einer durch einen Nutboden begrenzten Tiefe als auch ein vollständiger Durchbruch eines Bauteils als "Nut" bezeichnet. Wenn die Mantelwand von der Nut vollständig durchbrochen ist, muss der Zylinder zumindest im Bereich der zumindest einen Nut von einer Hülle für das Dämpffluid dicht umhüllt sein, um einen unkontrollierten Austritt des Dämpffluides aus dem Zylinder zu verhindern.

Die Nut ist vorzugsweise länglich, das heißt, die zumindest eine Nut hat eine Länge, die wesentlich größer ist als eine dazu orthogonale Breite.

Die zumindest eine Nut weist vorzugsweise zum Durchtritt des Dämpfungsfluides eine Querschnittsfläche auf, wobei die Querschnittsfläche insbesondere über die Hubstrecke variabel sein kann und beispielsweise in den beiden Endbereichen der Hubstrecke kleiner ist als in einem zwischen den beiden Endbereichen liegenden Zentralbereich der Hubstrecke.

Der Strömungswiderstand des Dämpffluides, und somit die Dämpfkraft des Dämpfers, wird bei einer vorgegebenen Strömungsgeschwindigkeit des Dämpffluides hauptsächlich von der an den Kolben angrenzenden Querschnittsfläche der zumindest einen Nut bestimmt. Daher führt eine kleine Querschnittsfläche zu einem großen Strömungswiderstand und somit einer großen Dämpfkraft, wohingegen eine große Querschnittsfläche zu einem kleinen Strömungswiderstand und somit einer kleinen Dämpfkraft führt.

Wenn die an den Kolben angrenzenden Querschnittsfläche in den beiden Endbereichen der Hubstrecke kleiner ist als in dem Zentralbereich, wird dadurch ein zu hoher Anstieg der Dämpfkraft mit der Ausziehgeschwindigkeit des Sicherheitsgurtes in dem Zentralbereich verhindert.

Die Querschnittsfläche ändert sich abhängig von der Hubstrecke vorzugsweise stetig, um eine gleichmäßige Belastung des Insassen zu gewährleisten.

Der Verlauf der Querschnittsfläche abhängig von der Hubstrecke ist vorzugsweise so gewählt, dass die Dämpfkraft des Fluiddämpfers bei einem erwarteten Verlauf der Ausziehgeschwindigkeit über die Hubstrecke konstant ist. Dazu ist der Verlauf der Querschnittsfläche abhängig von der Hubstrecke beispielsweise proportional zum Verlauf der Ausziehgeschwindigkeit abhängig von der Hubstrecke.

Die zumindest eine Nut weist vorzugsweise eine Breite in Umfangsrichtung um die Längsachse auf, wobei die Breite über die Hubstrecke variabel ist, und die Breite insbesondere in den beiden Endbereichen der Hubstrecke kleiner ist als in dem Zentralbereich der Hubstrecke. Eine Nut mit variabler Breite hat den Vorteil, dass sie eine konstante Tiefe radial zur Längsachse haben kann, sodass eine Dicke der Mantelwand besonders gering gewählt werden kann. Dadurch kann der Fluiddämpfer besonders materialsparend und leicht hergestellt werden, beispielsweise indem der Zylinder aus einem gezogenen Rohr gefertigt wird.

Die zumindest eine Nut weist vorzugsweise eine Tiefe radial zur Längsachse auf, wobei die Tiefe über die Hubstrecke variabel ist, und die Tiefe insbesondere in den beiden Endbereichen der Hubstrecke kleiner ist als in dem Zentralbereich der Hubstrecke. Eine Nut mit variabler Tiefe hat den Vorteil, dass sie eine konstante Breite in Umfangsrichtung um die Längsachse haben kann, sodass sie besonders einfach hergestellt werden kann. Eine solche Nut kann beispielsweise in einem einzigen Arbeitsschritt in den Mantel gefräst werden.

Die zumindest eine Nut läuft vorzugsweise wendelartig um die Längsachse um, wobei eine Steigung der Nut entlang der Längsachse über die Hubstrecke variabel ist, und die Steigung insbesondere in den beiden Endbereichen der Hubstrecke größer ist als in dem Zentralbereich der Hubstrecke. Eine wendelartige Nut mit variabler Steigung kann eine konstante Tiefe radial zur Längsachse haben, sodass die Dicke der Mantelwand besonders gering gewählt werden kann. Außerdem ist eine solche Nut besonders einfach herzustellen und kann beispielsweise in einem einzigen Arbeitsschritt in den Mantel gefräst, gelasert oder mit einem Formwerkzeug hergestellt werden.

Der Ausdruck "wendelartig" bedeutet im Sinne der Erfindung, dass die zumindest eine Nut zumindest abschnittsweise in einer Richtung zwischen der Umfangsrichtung um die Längsachse und einer Axialrichtung entlang der Längsachse verläuft. Dabei beschreibt die Nut vorzugsweise zumindest einen vollständigen Umlauf um die Längsachse, insbesondere mehr als einen vollständigen Umlauf um die Längsachse. Ein mehr als vollständiger Umlauf kann sich positiv auf das Federverhalten des Fluiddämpfers auswirken.

Die zumindest eine Nut umfasst vorzugsweise einen äußeren Nutteil in dem Außenzylinder und einen inneren Nutteil in dem Innenzylinder. Damit der innere Nutteil zusammen mit dem äußerem Nutteil die zumindest eine Nut bilden kann, ist der innere Nutteil ein Durchbruch durch den Innenzylinder. Der äußere Nutteil kann einen Nutboden aufweisen oder ein Durchbruch durch den Außenzylinder sein.

Wenn der Innenzylinder durch eine Verschiebung des Kolbens relativ zu dem Außenzylinder, die entlang der Längsachse stattfindet, relativ zu dem Außenzylinder beweglich ist, bewirkt die Bewegung des Innenzylinders vorzugsweise eine von der Position des Kolbens auf der Hubstrecke abhängige Einstellung der Überdeckung des äußeren Nutteils mit dem inneren Nutteil entlang der Mantelflächen, wobei der äußere Nutteil und der innere Nutteil bevorzugt eine geringere Überdeckung haben, wenn sich der Kolben in einem der beiden Endbereiche der Hubstrecke befindet, als wenn sich der Kolben in dem Zentralbereich der Hubstrecke befindet.

Wenn der äußere und der innere Nutteil eine geringe Überdeckung haben, hat die Nut dadurch eine geringe zum Durchtritt des Dämpfungsfluides wirksame Tiefe radial zur Längsachse und dadurch eine geringe Querschnittsfläche zum Durchtritt des Dämpfungsfluides. Die Verschiebung des Kolbens bewirkt durch die Bewegung des Innenzylinders somit, dass die Querschnittsfläche geringer ist, wenn sich der Kolben in den Endbereichen befindet, als wenn sich der Kolben in dem Zentralbereich befindet.

Wenn der Innenzylinder durch eine entlang der Längsachse auf den Kolben wirkende Kraft relativ zu dem Außenzylinder aus der Ruheposition ausgelenkt wird, bewirkt die Auslenkung des Innenzylinders vorzugsweise eine von dem Betrag der Kraft abhängige Einstellung einer Überdeckung des äußeren Nutteils mit dem äußeren Nutteil entlang der Mantelflächen, wobei der äußere Nutteil und der innere Nutteil insbesondere eine größere Überdeckung haben, wenn sich der Innenzylinder in der Ruheposition befindet, als wenn der Innenzylinder aus der Ruheposition ausgelenkt ist.

Die auf den Kolben wirkende Kraft bewirkt durch die Auslenkung des Innenzylinders somit, dass sich mit steigender Kraft die an den Kolben angrenzende Querschnittsfläche der Nut zum Durchtritt des Dämpfungsfluides verringert und sich somit die Dämpfkraft erhöht. Das heißt, wenn in Insasse durch seine hohe Masse oder eine hohe Aufprallgeschwindigkeit eine große Kraft auf den Sicherheitsgurt und dadurch auf den Kolben ausübt, wird der Insasse durch eine höhere Dämpfkraft zurückgehalten als ein Insasse, der leichter ist oder einen Unfall mit einer geringeren Aufprallgeschwindigkeit hat. Die Dämpfkraft passt sich also selbsttätig an die Masse des Insassen und die Aufprallgeschwindigkeit an, sodass einerseits eine Belastung des Insassen durch den Sicherheitsgurt möglichst gering gehalten werden kann, und andererseits die Rückhaltekraft hoch genug ist, damit der Insasse nicht mir zu hoher Bewegungsenergie auf den Airbag auftrifft.

Die zumindest eine Nut weist vorzugsweise eine Höhe entlang einer Auslenkrichtung der Auslenkung des Innenzylinders aus der Ruheposition auf, wobei die Höhe über die Hubstrecke konstant ist. Dadurch wird sichergestellt, dass eine gegebene Auslenkung des Innenzylinders unabhängig von einer Position des Kolbens auf der Hubstrecke die gleiche relative Änderung der Dämpfkraft bewirkt. Die Anpassung der Dämpfkraft an die Masse des Insassen oder die Aufprallgeschwindigkeit erfolgt somit gleichermaßen über die gesamte Hubstrecke, sodass der Insasse über die gesamte Ausziehstrecke des Sicherheitsgurtes eine gleichermaßen an seine Masse oder die Aufprallgeschwindigkeit angepasste Rückhaltekraft erfährt.

Die Erfindung betrifft einen Gurtkraftbegrenzer für einen Sicherheitsgurt, umfassend einen erfindungsgemäßen Fluiddämpfer zur Modulierung einer Rückhaltekraft des Sicherheitsgurtes.

Der Kolben des Fluiddämpfers ist beispielsweise an einer Kolbenstange befestigt, die entlang der Längsachse des Zylinders des Fluiddämpfers aus dem Zylinder herausgeführt ist. Die Kolbenstange kann über ein Kopplungselement an den Sicherheitsgurt gekoppelt sein, und der Zylinder kann ein weiteres Kopplungselement zur Kopplung an einen Sitz oder eine Karosserie eines Fahrzeugs umfassen, oder umgekehrt. Dadurch kann der Kolben durch eine Ausziehbewegung des Sicherheitsgurtes relativ zu dem Sitz oder zu der Karosserie in dem Zylinder entlang der Hubstrecke in den Zylinder hinein oder aus dem Zylinder heraus verschoben werden. Dabei wird die Ausziehbewegung von einer Dämpfkraft des Fluiddämpfers gedämpft, woraus sich die zuvor zum Fluiddämpfer beschriebenen Vorteile und Ausgestaltungsmöglichkeiten ergeben.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt eine schematische Ansicht eines erfindungsgemäßen Fluiddämpfers.
Figur 2 zeigt einen Ausschnitt aus der Nut des Fluiddämpfers aus Figur 1.
Figur 3 zeigt einen schematischen Längsschnitt durch einen Ausschnitt der Mantelwand des Zylinders des Fluiddämpfers aus Figur 1.
Figur 4 zeigt einen schematischen Längsschnitt durch einen Ausschnitt des Fluiddämpfers aus Figur 1 in einem Zustand für ein hohes Insassengewicht.
Figur 5 zeigt einen weiteren schematischen Längsschnitt durch einen Ausschnitt des Fluiddämpfers aus Figur 1 in einem Zustand für eine niedriges Insassengewicht.
Figur 6 zeigt schematisch einen beispielhaften Verlauf der an den Kolben eines erfindungsgemäßen Fluiddämpfers angrenzenden Querschnittsfläche.
Figur 7 zeigt einen beispielhaften Verlauf der an den Kolben eines erfindungsgemäßen Fluiddämpfers angrenzenden Querschnittsfläche für einen Insassen mit einer Oberkörpermasse von 17,6 kg.
Figur 8 zeigt einen beispielhaften Verlauf der an den Kolben eines erfindungsgemäßen Fluiddämpfers angrenzenden Querschnittsfläche für einen Insassen mit einer Oberkörpermasse von 32,5 kg.
Figur 9 zeigt eine beispielhafte Simulation des Verlaufs der Dämpfkraft eines erfindungsgemäßen Fluiddämpfers abhängig von der Position des Kolbens auf der Hubstrecke für einen Insassen mit einer Oberkörpermasse von 17,6 kg.
Figur 10 zeigt eine beispielhafte Simulation des Verlaufs der Dämpfkraft eines erfindungsgemäßen Fluiddämpfers abhängig von der Position des Kolbens auf der Hubstrecke für einen Insassen mit einer Oberkörpermasse von 32,5 kg.
Figur 11 zeigt eine beispielhafte Simulation des Verlaufs der Dämpfkraft eines erfindungsgemäßen Fluiddämpfers abhängig von der Position des Kolbens auf der Hubstrecke für einen Insassen mit einer Oberkörpermasse von 25 kg.

### Fig.1

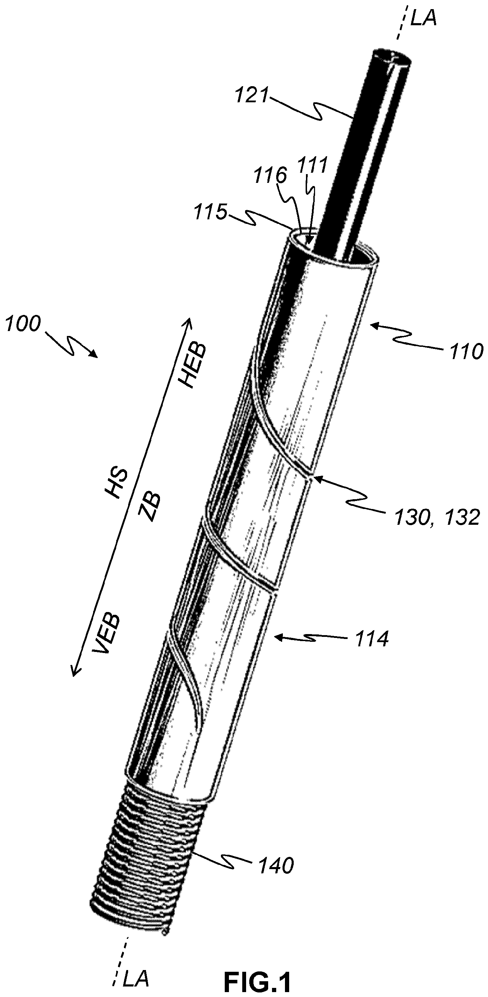

Figur 1 zeigt eine schematische Ansicht eines erfindungsgemäßen Fluiddämpfers 100 zur Modulierung einer Rückhaltekraft eines Sicherheitsgurtes (nicht dargestellt).

Der dargestellte Fluiddämpfer 100 umfasst einen Zylinder 110 mit einem mit einem Dämpffluid (nicht dargestellt) gefüllten Innenraum 111 und einen in dem Innenraum 111 entlang einer Längsachse LA des Zylinders 110 von einem hinteren Endbereich HEB einer Hubstrecke HS zu einem vorderen Endbereich VEB der Hubstrecke HS verschieblichen Kolben (nicht dargestellt).

Der Kolben teilt den Innenraum 111 in eine vordere Fluidkammer (nicht dargestellt) entlang der Längsachse LA vor dem Kolben und eine hintere Fluidkammer (nicht dargestellt) entlang der Längsachse LA hinter dem Kolben.

Der Kolben ist beispielsweise an einer Kolbenstange 121 befestigt, die entlang der Längsachse LA aus dem Zylinder 110 herausgeführt ist.

Eine Mantelwand 114 des Zylinders 110 umfasst eine als Nut 132 ausgestaltete Leitung 130, wobei die Nut 132 die vordere Fluidkammer für das Dämpffluid leitend mit der hinteren Fluidkammer verbindet.

Zur besseren Sichtbarkeit ist die Nut 132 als Durchbruch durch die Mantelwand 114 dargestellt. In diesem Fall muss der Zylinder 110 von einer Hülse (nicht dargestellt) umgeben sein, die einen Austritt von Dämpffluid aus dem Innenraum 111 durch die Nut 132 verhindert. Alternativ kann die Nut 132 einen Nutboden aufweisen, der eine Tiefe der Nut 132 radial zur Längsachse LA begrenzt.

Die Nut 132 läuft im dargestellten Beispiel wendelartig um die Längsachse LA um, wobei eine Steigung der Nut 132 entlang der Längsachse LA in den beiden Endbereichen HEB, VEB der Hubstrecke HS größer ist als in dem Zentralbereich ZB der Hubstrecke HS.

Dadurch weist die Nut 132 eine Breite in Umfangsrichtung um die Längsachse LA auf, die in den beiden Endbereichen HEB, VEB der Hubstrecke HS kleiner ist als in dem Zentralbereich ZB der Hubstrecke HS.

Dadurch weist die Nut 132 zum Durchtritt des Dämpfungsfluides eine Querschnittsfläche auf, die in den beiden Endbereichen HEB, VEB der Hubstrecke HS kleiner ist als in einem zwischen den beiden Endbereichen HEB, VEB liegenden Zentralbereich ZB der Hubstrecke HS.

Im dargestellten Beispiel umfasst der Zylinder 110 einen Außenzylinder 115 und einen Innenzylinder 116, wobei der Außenzylinder 115 und der Innenzylinder 116 koaxial zur Längsachse LA angeordnet sind, wobei eine äußere Mantelfläche des Innenzylinders 116 an einer inneren Mantelfläche des Außenzylinders 115 für das Dämpffluid dichtend anliegt.

Der dargestellte Fluiddämpfer 100 umfasst ein Federelement 140, beispielsweise eine Schraubendruckfeder. Das Federelement 140 spannt den Innenzylinder 116 im gezeigten Beispiel entlang der Längsachse LA relativ zu dem Außenzylinder 115 in eine Ruheposition vor, wobei der Innenzylinder 116 durch eine entlang der Längsachse LA auf den Kolben wirkende Kraft gegen die Federkraft des Federelements 140 relativ zu dem Außenzylinder 115 entlang der Längsachse LA linear aus der Ruheposition auslenkbar ist.

### Fig.2

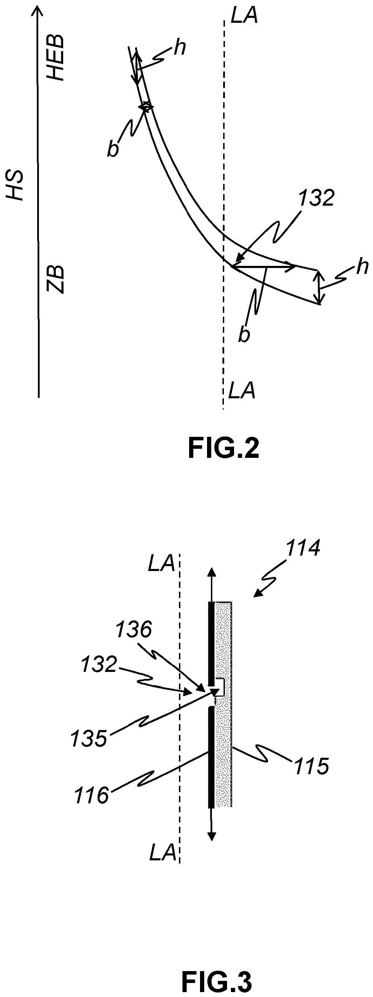

Figur 2 zeigt einen schematischen Ausschnitt aus der Nut 132 des Fluiddämpfers aus Figur 1 im hinteren Endbereich HEB und im Zentralbereich ZB der Hubstrecke HS. Die gezeigte Nut 132 ist so geformt, dass sie in Umfangsrichtung um die Längsachse LA eine Breite b hat, die im Zentralbereich ZB größer ist als im hinteren Endbereich HEB der Hubstrecke HS.

Die Nut 132 ist vorzugsweise so geformt, dass sie eine über die gesamte Hubstrecke HS konstante Höhe h entlang der Längsachse LA hat.

### Fig.3

Figur 3 zeigt einen schematischen Längsschnitt entlang der Längsachse LA durch einen Ausschnitt der Mantelwand 114 des Zylinders 110 des Fluiddämpfers aus Figur 1.

In Figur 3 ist deutlich erkennbar, dass der Zylinder 110 aus einem Außenzylinder 115 und einem darin angeordneten Innenzylinder 116 besteht, wobei der Innenzylinder 116 relativ zu dem Außenzylinder 115 entlang der Längsachse LA linear auslenkbar ist (durch Pfeile symbolisiert).

Die Nut 132 in der Mantelwand 114 des Zylinders 110 umfasst einen als äußeren Nutteil ausgebildeten äußeren Leitungsteil 135 in dem Außenzylinder 115 und einen als inneren Nutteil ausgebildeten inneren Leitungsteil 136 in dem Innenzylinder 116. Der innere Leitungsteil 136 ist ein Durchbruch durch den Innenzylinder 116. Der äußere Leitungsteil 135 hat in der in Figur 3 gezeigten Ausgestaltung eine durch einen Nutboden begrenzte Tiefe radial zur Längsachse LA.

Wenn der Innenzylinder 116 relativ zu dem Außenzylinder 115, beispielsweise durch die entlang der Längsachse LA auf den Kolben (nicht dargestellt) des Fluiddämpfers wirkende Kraft, entlang der Längsachse LA linear ausgelenkt wird, verändert sich dadurch die Überdeckung der beiden Leitungsteile 135, 136 und somit die zum Durchtritt des Dämpfungsfluides wirksame Tiefe der Nut 132 radial zur Längsachse LA.

In der in Figur 3 gezeigten Relativposition von Innenzylinder 116 und Außenzylinder 115 zueinander haben die beiden Leitungsteile 135, 136 beispielsweise eine Überdeckung von etwa 50 %. Dadurch trägt die Tiefe des äußeren Leitungsteils 135 nur zu etwa 50 % zur wirksamen Tiefe der gesamten Nut 132 bei.

### Fig.4

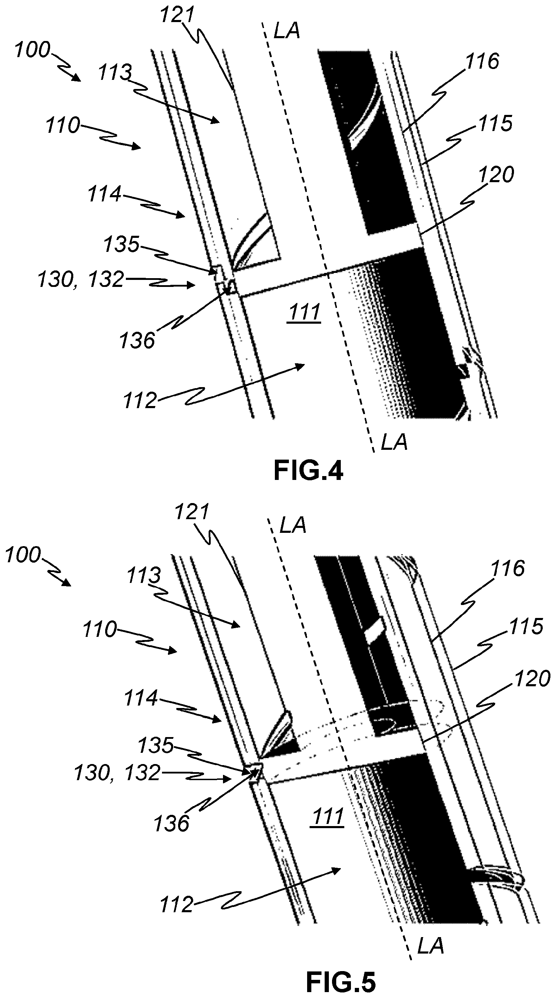

Figur 4 zeigt einen schematischen Längsschnitt entlang der Längsachse LA durch einen Ausschnitt des Fluiddämpfers 100 aus Figur 1 in einem Zustand für ein hohes Insassengewicht oder eine hohe Aufprallgeschwindigkeit.

In Figur 4 ist erkennbar, dass der Kolben 120 des Fluiddämpfers 100 den Innenraum 111 des Zylinders 110 des Fluiddämpfers 100 entlang der Längsachse LA in eine vordere Fluidkammer 112 und eine hintere Fluidkammer 113 teilt.

Ferner ist erkennbar, dass die Nut 132 in der Mantelwand 114 des Zylinders 110 die vordere Fluidkammer 112 als Leitung 130 für das Dämpffluid leitend mit der hinteren Fluidkammer 113 verbindet und somit einen Bypass für das Dämpffluid um den Kolben 120 herum bildet.

Die Nut 132 umfasst einen als äußeren Nutteil ausgebildeten äußeren Leitungsteil 135 in dem Außenzylinder 115 und einen als inneren Nutteil ausgebildeten inneren Leitungsteil 136 in dem Innenzylinder 116. Der innere Leitungsteil 136 ist ein Durchbruch durch den Innenzylinder 116. Der äußere Leitungsteil 135 ist in Figur 4 zur besseren Sichtbarkeit als Durchbruch durch den Außenzylinder 115 dargestellt. Alternativ kann der äußere Leitungsteil 135 eine durch einen Nutboden begrenzte Tiefe radial zur Längsachse LA haben.

In der in Figur 4 gezeigten Relativposition von Innenzylinder 116 und Außenzylinder 115 zueinander haben die beiden Leitungsteile 135, 136 eine minimale Überdeckung. Dadurch trägt die Tiefe des äußeren Leitungsteils 135 minimal zur wirksamen Tiefe der gesamten Nut 132 bei. Folglich ist die Querschnittsfläche zum Durchtritt des Dämpffluids durch die Nut 132 minimal und die Dämpfkraft des Fluiddämpfers 100 maximal.

Der Innenzylinder 116 sollte daher durch einen Insassen mit der maximalen Masse und/oder einen Unfall mit der maximalen Aufprallgeschwindigkeit, für die der Fluiddämpfer 100 ausgelegt ist, in die in Figur 4 gezeigte Position relativ zum Außenzylinder 115 ausgelenkt werden, damit der Insasse die maximale Rückhaltekraft durch einen an den Fluiddämpfer 100 gekoppelten Sicherheitsgurt (nicht dargestellt) erfährt.

### Fig.5

Figur 5 zeigt einen weiteren schematischen Längsschnitt entlang der Längsachse LA durch einen Ausschnitt des Fluiddämpfers 100 aus Figur 1 in einem Zustand für ein niedriges Insassengewicht oder eine niedrige Aufprallgeschwindigkeit.

Figur 5 unterscheidet sich von Figur 4 darin, dass die beiden Leitungsteile 135, 136 in der in Figur 5 gezeigten Relativposition von Innenzylinder 116 und Außenzylinder 115 zueinander eine maximale Überdeckung haben. Dadurch trägt die Tiefe des äußeren Leitungsteils 135 maximal zur wirksamen Tiefe der gesamten Nut 132 bei. Folglich ist die Querschnittsfläche zum Durchtritt des Dämpffluids durch die Nut 132 maximal und die Dämpfkraft des Fluiddämpfers 100 minimal.

Der Innenzylinder 116 sollte daher durch einen Insassen mit der minimalen Masse und/oder einen Unfall mit der minimalen Aufprallgeschwindigkeit, für die der Fluiddämpfer 100 ausgelegt ist, in die in Figur 5 gezeigte Position relativ zum Außenzylinder 115 ausgelenkt werden, damit der Insasse die minimale Rückhaltekraft durch einen an den Fluiddämpfer 100 gekoppelten Sicherheitsgurt (nicht dargestellt) erfährt.

Die in Figur 5 gezeigte Relativposition von Innenzylinder 116 und Außenzylinder 115 zueinander kann insbesondere der Ruheposition des Innenzylinders 116 entsprechen, in die der Innenzylinder 116 durch das Federelement (nicht dargestellt) des Fluiddämpfers 100 vorgespannt wird.

### Fig.6

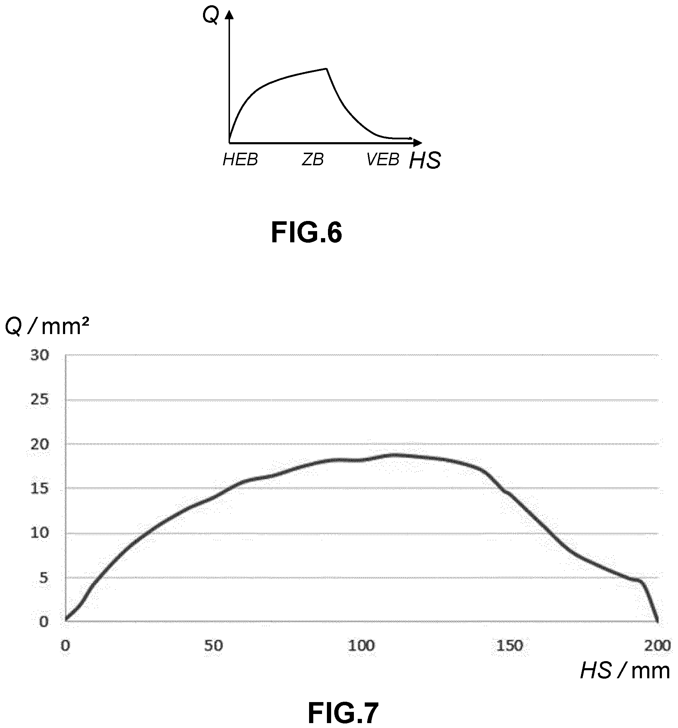

Figur 6 zeigt schematisch einen beispielhaften Verlauf der an den Kolben eines erfindungsgemäßen Fluiddämpfers angrenzenden Querschnittsfläche Q der Nut im Zylindermantel des Zylinders des Fluiddämpfers abhängig von der Position des Kolbens auf der Hubstrecke HS des Kolbens.

Die an den Kolben angrenzende Querschnittsfläche Q ist in den beiden Endbereichen HEB, VEB der Hubstrecke HS kleiner ist als in einem zwischen den beiden Endbereichen HEB, VEB liegenden Zentralbereich ZB der Hubstrecke HS.

Der Verlauf der Querschnittsfläche Q entspricht vorzugsweise einem erwarteten Verlauf einer Geschwindigkeit des Kolbens entlang der Hubstrecke HS. Der Verlauf der Geschwindigkeit des Kolbens kann beispielsweise vom individuellen Crashverhalten eines Fahrzeugs, in dem der Fluiddämpfer zum Einsatz kommt, abhängig sein. Durch eine geeignete Auslegung des Verlaufs der Querschnittsfläche kann die Dämpfkraft des Fluiddämpfers insbesondere an einen ungleichmäßigen Verlauf der Geschwindigkeit des Kolbens angepasst werden.

### Fig.7

Figur 7 zeigt einen beispielhaften Verlauf der an den Kolben eines erfindungsgemäßen Fluiddämpfers angrenzenden Querschnittsfläche Q in mm² der Nut im Zylindermantel des Zylinders des Fluiddämpfers abhängig von der Position in mm des Kolbens auf der Hubstrecke HS des Kolbens.

In Figur 7 ist der Zustand dargestellt, in dem sich der Innenzylinder des Fluiddämpfers in der Ruheposition befindet, in der die Überdeckung des inneren Nutteils mit dem äußeren Nutteil maximal ist, sodass sich eine maximale Querschnittsfläche und somit eine minimale Dämpfkraft ergibt. Dieser Zustand stellt sich beispielsweise ein, wenn ein an den Fluiddämpfer gekoppelter Sicherheitsgurt einen Insassen mit einer Oberkörpermasse von 17,6 kg in einem Fahrzeug mit einer Masse von 1572 kg bei einer Aufprallgeschwindigkeit von 50 km/h zurückhält.

Für die Auslegung der Rückhaltekraft eines Sicherheitsgurtes ist nur die Oberkörpermasse des zurückgehaltenen Insassen relevant, die sich aus Kopfmasse, Armmasse und Torsomasse des Insassen zusammensetzt. Der Unterkörper des Insassen wird durch den Beckengurt in der Regel so fest am Sitz fixiert, dass der Unterkörper relativ zum Sitz keine wesentliche Beschleunigung erfährt, sodass die Unterkörpermasse für die Rückhaltekraft des Sicherheitsgurts keine Rolle spielt.

### Fig.8

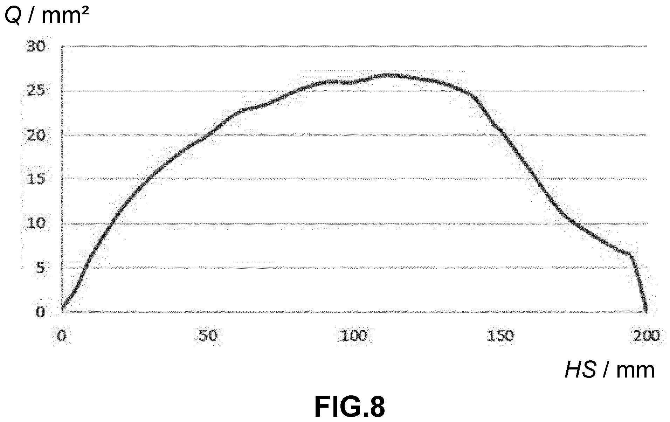

Figur 8 zeigt einen beispielhaften Verlauf der an den Kolben eines erfindungsgemäßen Fluiddämpfers angrenzenden Querschnittsfläche Q in mm² der Nut im Zylindermantel des Zylinders des Fluiddämpfers abhängig von der Position in mm des Kolbens auf der Hubstrecke HS des Kolbens.

In Figur 8 ist der Zustand dargestellt, in dem der Innenzylinder des Fluiddämpfers maximal aus der Ruheposition ausgelenkt ist, sodass die Überdeckung des inneren Nutteils mit dem äußeren Nutteil minimal ist, sodass sich eine minimale Querschnittsfläche und somit eine maximale Dämpfkraft ergibt. Dieser Zustand stellt sich beispielsweise ein, wenn ein an den Fluiddämpfer gekoppelter Sicherheitsgurt einen Insassen mit einer Oberkörpermasse von 32,5 kg in einem Fahrzeug mit einer Masse von 1572 kg bei einer Aufprallgeschwindigkeit von 50 km/h zurückhält.

### Fig.9

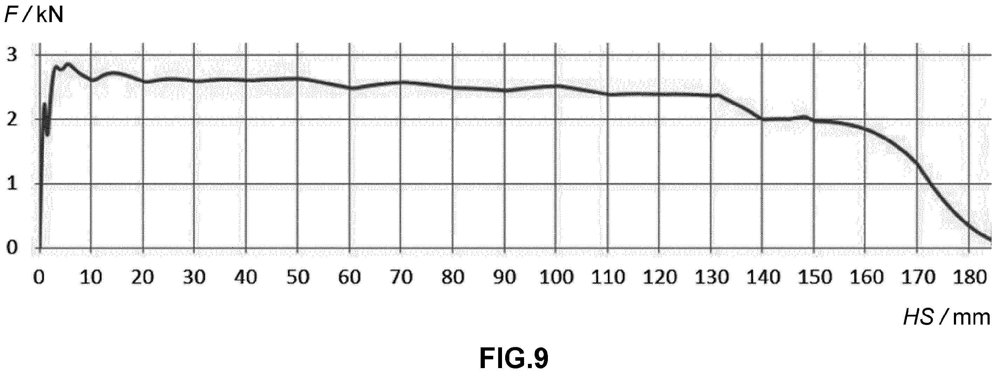

Figur 9 zeigt eine beispielhafte Simulation des Verlaufs der Dämpfkraft F in kN eines erfindungsgemäßen Fluiddämpfers abhängig von der Position in mm des Kolbens auf der Hubstrecke HS des Kolbens, wenn ein an den Fluiddämpfer gekoppelter Sicherheitsgurt einen Insassen mit einer Oberkörpermasse von 17,6 kg in einem Fahrzeug mit einer Masse von 1572 kg bei einer Aufprallgeschwindigkeit von 50 km/h zurückhält.

In diesem Fall befindet sich der Innenzylinder des Fluiddämpfers in der Ruheposition, in der die Überdeckung des inneren Nutteils mit dem äußeren Nutteil maximal ist, sodass sich eine maximale Querschnittsfläche und somit eine minimale Dämpfkraft ergibt. Die Dämpfkraft beträgt beispielsweise etwa 2,5 kN und ist über die Hubstrecke HS in etwa konstant.

### Fig.10

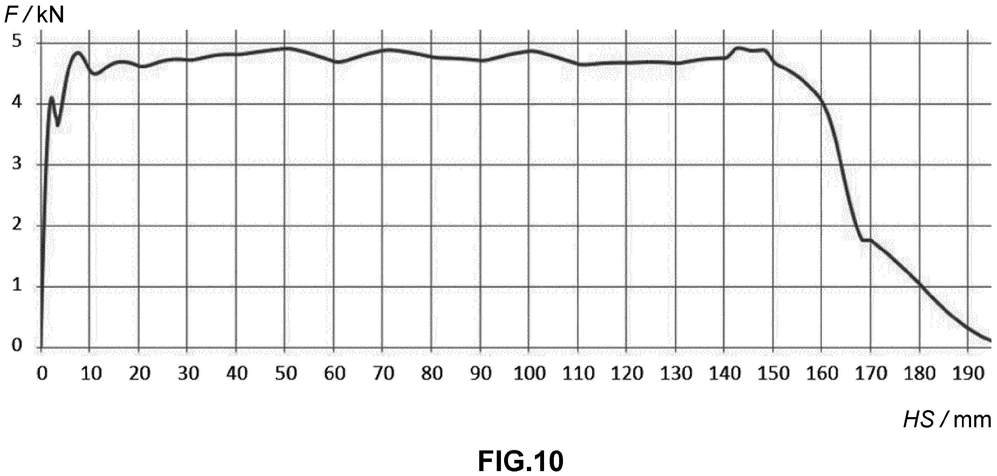

Figur 10 zeigt eine beispielhafte Simulation des Verlaufs der Dämpfkraft F in kN eines erfindungsgemäßen Fluiddämpfers abhängig von der Position in mm des Kolbens auf der Hubstrecke HS des Kolbens, wenn ein an den Fluiddämpfer gekoppelter Sicherheitsgurt einen Insassen mit einer Oberkörpermasse von 32,5 kg in einem Fahrzeug mit einer Masse von 1572 kg bei einer Aufprallgeschwindigkeit von 50 km/h zurückhält.

In diesem Fall ist der Innenzylinder des Fluiddämpfers maximal aus der Ruheposition ausgelenkt, sodass die Überdeckung des inneren Nutteils mit dem äußeren Nutteil minimal ist, sodass sich eine minimale Querschnittsfläche und somit eine maximale Dämpfkraft ergibt. Die Dämpfkraft beträgt beispielsweise etwa 4,5 kN und ist über die Hubstrecke HS in etwa konstant.

### Fig.11

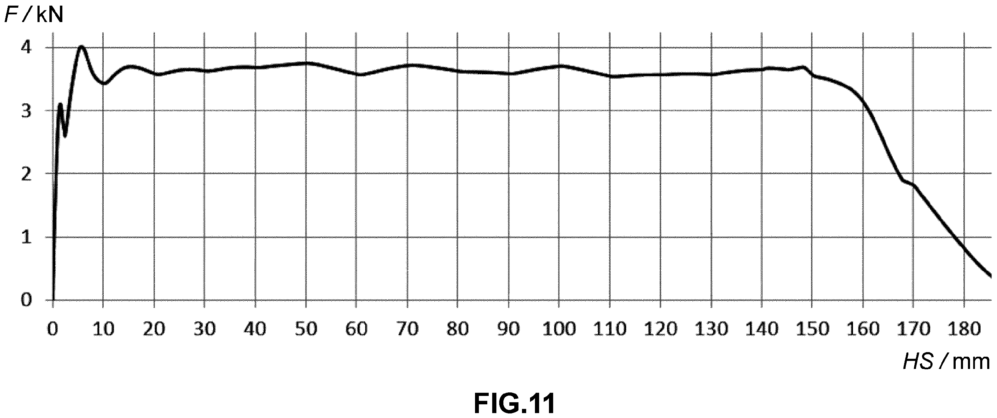

Figur 11 zeigt eine beispielhafte Simulation des Verlaufs der Dämpfkraft F in kN eines erfindungsgemäßen Fluiddämpfers abhängig von der Position in mm des Kolbens auf der Hubstrecke HS des Kolbens, wenn ein an den Fluiddämpfer gekoppelter Sicherheitsgurt einen Insassen mit einer Oberkörpermasse von 25 kg in einem Fahrzeug mit einer Masse von 1572 kg bei einer Aufprallgeschwindigkeit von 50 km/h zurückhält.

In diesem Fall befindet sich der Innenzylinder des Fluiddämpfers in einer Zwischenposition zwischen der Ruheposition und der maximalen Auslenkung daraus, sodass die Dämpfkraft zwischen ihrem Minimal- und Maximalwert liegt, beispielsweise bei etwa 3,5 kN, und vorzugsweise über die Hubstrecke HS in etwa konstant ist.

Der Verlauf der Dämpfkraft F hängt von der Masse und der fluiddynamischen Dämpfung des Innenzylinders ab. Für den in den Figuren 9 bis 11 gezeigten Verlauf der Dämpfkraft F wurden eine Masse von 275 g und eine Dämpfung von 500 Ns/m angenommen.

### Liste der Bezugszeichen

| | | | |
|---|---|---|---|
| 100 | Fluiddämpfer | 132 | Nut |
| 110 | Zylinder | 135 | äußerer Leitungsteil |
| 111 | Innenraum | 136 | innerer Leitungsteil |
| 112 | vordere Fluidkammer | 140 | Federelement |
| 113 | hintere Fluidkammer | b | Breite |
| 114 | Mantelwand | F | Dämpfkraft |
| 115 | Außenzylinder | h | Höhe |
| 116 | Innenzylinder | HEB | hinterer Endbereich |
| | | HS | Hubstrecke |
| 120 | Kolben | LA | Längsachse |
| 121 | Kolbenstange | Q | Querschnittsfläche |
| 130 | Leitung | VEB | vorderer Endbereich |
| | | ZB | Zentralbereich |

## Patentansprüche

1. Fluiddämpfer (100) zur Modulierung einer Rückhaltekraft eines Sicherheitsgurtes,
a. wobei der Fluiddämpfer (100) einen Außenzylinder (115) und einen in dem Außenzylinder (115) koaxial zu einer gemeinsamen Längsachse (LA) angeordneten Innenzylinder (116) umfasst,
b. wobei der Innenzylinder (116) einen mit einem Dämpffluid gefüllten Innenraum (111) umschließt,
c. wobei der Fluiddämpfer (100) einen in dem Innenraum (111) entlang der Längsachse (LA) entlang einer Hubstrecke (HS) verschieblichen Kolben (120) umfasst,
d. wobei der Fluiddämpfer (100) zumindest eine Leitung (130) umfasst,
e. wobei die zumindest eine Leitung (130) eine entlang der Längsachse (LA) vor dem Kolben (120) liegende vordere Fluidkammer (112) für das Dämpffluid leitend mit einer entlang der Längsachse (LA) hinter dem Kolben (120) liegenden hinteren Fluidkammer (113) verbindet,
f. wobei die zumindest eine Leitung (130) einen äußeren Leitungsteil (135) in einer Mantelwand des Außenzylinders (115) und einen inneren Leitungsteil (136) in einer Mantelwand des Innenzylinders (116) umfasst,
g. wobei eine äußere Mantelfläche des Innenzylinders (116) an einer inneren Mantelfläche des Außenzylinders (115) für das Dämpffluid dichtend anliegt, und
h. wobei der Innenzylinder (116) durch eine entlang der Längsachse (LA) auf den Kolben (120) wirkende Kraft relativ zu dem Außenzylinder (115) aus einer Ruheposition auslenkbar ist,
i. sodass die Auslenkung des Innenzylinders (116) eine von dem Betrag der Kraft abhängige Einstellung einer Überdeckung des äußeren Leitungsteils (135) mit dem inneren Leitungsteil (136) entlang der Mantelflächen bewirkt,
**dadurch gekennzeichnet, dass**
j. die zumindest eine Leitung (130) eine Nut (132) in der Mantelwand des Innenzylinders (116) und des Außenzylinders (115) zur Leitung des Dämpfungsfluides an dem Kolben (120) vorbei aus der vorderen Fluidkammer (112) in die hintere Fluidkammer (113) umfasst.

2. Fluiddämpfer (100) nach Anspruch 1,
**dadurch gekennzeichnet, dass**
a. der Innenzylinder (116) durch die entlang der Längsachse (LA) auf den Kolben (120) wirkende Kraft aus der Ruheposition entlang der Längsachse (LA) linear auslenkbar ist,
b. sodass die lineare Auslenkung des Innenzylinders (116) eine von dem Betrag der Kraft abhängige Einstellung der Überdeckung des äußeren Leitungsteils (135) mit dem inneren Leitungsteil (136) entlang der Mantelflächen bewirkt.

3. Fluiddämpfer (100) nach Anspruch 1 oder 2,
**gekennzeichnet durch**
a. ein Federelement (140),
b. wobei das Federelement (140) der Auslenkung des Innenzylinders (116) relativ zu dem Außenzylinder (115) aus der Ruheposition entgegenwirkt,
c. wobei das Federelement (140) den Innenzylinder (116) bevorzugt relativ zu dem Außenzylinder (115) in die Ruheposition vorspannt.

4. Fluiddämpfer (100) nach einem der Ansprüche 1 bis 3,
**dadurch gekennzeichnet, dass**
a. die Nut (132) zum Durchtritt des Dämpfungsfluides eine Querschnittsfläche (Q) aufweist,
b. wobei die Querschnittsfläche (Q) über die Hubstrecke (HS) variabel ist,
c. wobei die Querschnittsfläche (Q) bevorzugt in den beiden Endbereichen (HEB, VEB) der Hubstrecke (HS) kleiner ist als in einem zwischen den beiden Endbereichen (HEB, VEB) liegenden Zentralbereich (ZB) der Hubstrecke (HS).

5. Fluiddämpfer (100) nach Anspruch 4,
**dadurch gekennzeichnet, dass**
a. die Nut (132) eine Breite (b) in Umfangsrichtung um die Längsachse (LA) aufweist,
b. wobei die Breite (b) über die Hubstrecke (HS) variabel ist,
c. wobei die Breite (b) bevorzugt in den beiden Endbereichen (HEB, VEB) der Hubstrecke (HS) kleiner ist als in dem Zentralbereich (ZB) der Hubstrecke (HS).

6. Fluiddämpfer (100) nach Anspruch 5,
**dadurch gekennzeichnet, dass**
a. die Nut (132) wendelartig um die Längsachse (LA) umläuft,
b. wobei eine Steigung der Nut (130) entlang der Längsachse (LA) über die Hubstrecke (HS) variabel ist,
c. wobei die Steigung der Nut (130) bevorzugt in den beiden Endbereichen (HEB, VEB) der Hubstrecke (HS) größer ist als in dem Zentralbereich (ZB) der Hubstrecke (HS).

7. Fluiddämpfer (100) nach Anspruch 6,
**dadurch gekennzeichnet, dass**
a. die Nut (132) eine Höhe (h) entlang einer Auslenkrichtung der Auslenkung des Innenzylinders (116) aus der Ruheposition aufweist,
b. wobei die Höhe (h) über die Hubstrecke (HS) konstant ist.

8. Gurtkraftbegrenzer für einen Sicherheitsgurt,
**gekennzeichnet durch**
einen Fluiddämpfer (100) nach einem der Ansprüche 1 bis 7 zur Modulierung einer Rückhaltekraft des Sicherheitsgurtes.

## Claims

1. A fluid damper (100) for modulating a retaining force of a seat belt,
a. the fluid damper (100) comprising an outer cylinder (115) and an inner cylinder (116) arranged in the outer cylinder (115) coaxial to a common longitudinal axis (LA),
b. the inner cylinder (116) enclosing an inner space (111) filled with a damping fluid,
c. the fluid damper (100) comprising a piston (120) shiftable in the inner space (111) along the longitudinal axis (LA) along a stroke length (HS),
d. the fluid damper (100) comprising at least one duct (130),
e. the at least one duct (130) connecting for the damping fluid conductively a front fluid chamber (112) disposed in front of the piston (120) along the longitudinal axis (LA) to a rear fluid chamber (113) disposed behind the piston (120) along the longitudinal axis (LA),
f. the at least one duct (130) comprising an outer duct portion (135) in a shell wall of the outer cylinder (115) and an inner duct portion (136) in a shell wall of the inner cylinder (116),
g. an outer shell surface of the inner cylinder (116) abutting on an inner shell surface of the outer cylinder (115) to be sealing for the damping fluid, and
h. the inner cylinder (116) being deflectable relative to the outer cylinder (115) from a rest position by a force acting on the piston (120) along the longitudinal axis (LA),
i. so that the deflection of the inner cylinder (116) causes an adjustment of an overlap of the outer duct portion (135) and the inner duct portion (136) along the shell surfaces depending on the magnitude of the force,
**characterised in that**
j. the at least one duct (130) comprises a groove (132) in the shell wall of the inner cylinder (116) and of the outer cylinder (115) for guiding the damping fluid past the piston (120) from the front fluid chamber (112) into the rear fluid chamber (113).

2. The fluid damper (100) according to claim 1,
**characterised in that**
a. the inner cylinder (116) is linearly deflectable from the rest position along the longitudinal axis (LA) by the force acting on the piston (120) along the longitudinal axis (LA),
b. so that the linear deflection of the inner cylinder (116) causes an adjustment of the overlap of the outer duct portion (135) and the inner duct portion (136) along the shell surfaces depending on the magnitude of the force.

3. The fluid damper (100) according to claim 1 or 2,
**characterised by**
a. a spring element (140),
b. the spring element (140) counteracting the deflection of the inner cylinder (116) relative to the outer cylinder (115) from the rest position,
c. the spring element (140) preferably biasing the inner cylinder (116) relative to the outer cylinder (115) into the rest position.

4. The fluid damper (100) according to one of claims 1 to 3,
**characterised in that**
a. the groove (132) for the passage of the damping fluid has a cross sectional area (Q),
b. the cross sectional area (Q) being variable over the stroke length (HS),
c. the cross-sectional area (Q) preferably being smaller in the two end portions (HEB, VEB) of the stroke length (HS) than in a central portion (ZB) of the stroke length (HS) located between the two end portions (HEB, VEB).

5. The fluid damper (100) according to claim 4,
**characterised in that**
a. the groove (132) has a width (b) in the circumferential direction about the longitudinal axis (LA),
b. the width (b) being variable over the stroke length (HS),
c. the width (b) preferably being smaller in the two end portions (HEB, VEB) of the stroke length (HS) than in the central portion (ZB) of the stroke length (HS).

6. The fluid damper (100) according to claim 5,
**characterised in that**
a. the groove (132) helically surrounds the longitudinal axis (LA),
b. a pitch of the groove (130) along the longitudinal axis (LA) being variable over the stroke length (HS),
c. the pitch of the groove (130) preferably being larger in the two end portions (HEB, VEB) of the stroke length (HS) than in the central portion (ZB) of the stroke length (HS).

7. The fluid damper (100) according to claim 6,
**characterised in that**
a. the groove (132) has a height (h) along a deflection direction of the deflection of the inner cylinder (116) from the rest position,
b. the height (h) being constant over the stroke length (HS).

8. A belt force limiter for a seat belt,
**characterised by**
a fluid damper (100) according to one of the claims 1 to 7 for modulating a retaining force of the seat belt.

## Revendications

1. Amortisseur à fluide (100) pour moduler une force de retenue d'une ceinture de sécurité,
a. l'amortisseur à fluide (100) comprenant un cylindre extérieur (115) et un cylindre intérieur (116) disposé dans le cylindre extérieur (115) coaxialement à un axe longitudinal commun (LA)
b. le cylindre intérieur (116) entourant un espace intérieur (111) rempli d'un fluide d'amortissement,
c. l'amortisseur à fluide (100) comprenant un piston (120) pouvant se déplacer dans l'espace intérieur (111) le long de l'axe longitudinal (LA) sur un trajet de course (HS),
d. l'amortisseur fluidique (100) comprenant au moins une conduite (130),
e. ladite au moins une conduite (130) reliant de manière conductrice pour le fluide d'amortissement une chambre à fluide avant (112), située devant le piston (120) le long de l'axe longitudinal (LA), à une chambre à fluide arrière (113) située derrière le piston (120) le long de l'axe longitudinal (LA),
f. ladite au moins une conduite (130) comprenant une partie de conduite extérieure (135) dans une paroi d'enveloppe du cylindre extérieur (115) et une partie de conduite intérieure (136) dans une paroi d'enveloppe du cylindre intérieur (116),
g. une surface d'enveloppe extérieure du cylindre intérieur (116) étant en contact étanche pour le fluide d'amortissement avec une surface d'enveloppe intérieure du cylindre extérieur (115), et
h. le cylindre intérieur (116) pouvant être dévié d'une position de repos par rapport au cylindre extérieur (115) par une force agissant sur le piston (120) le long de l'axe longitudinal (LA),
i. de sorte que la déviation du cylindre intérieur (116) provoque un réglage, dépendant de la valeur de la force, d'un recouvrement de la partie de conduite extérieure (135) avec la partie de conduite intérieure (136) le long des surfaces d'enveloppe ,
**caractérisé en ce que**
j. ladite au moins une conduite (130) comprend une rainure (132) dans la paroi d'enveloppe du cylindre intérieur (116) et du cylindre extérieur (115) pour conduire le fluide d'amortissement à côté du piston (120) de la chambre de fluide avant (112) à la chambre de fluide arrière (113).

2. Amortisseur à fluide (100) selon la revendication 1,
**caractérisé en ce que**
a. le cylindre intérieur (116) peut être dévié linéairement le long de l'axe longitudinal (LA) de la position de repos par la force agissant sur le piston (120) le long de l'axe longitudinal (LA),
b. de sorte que la déviation linéaire du cylindre intérieur (116) provoque un réglage, dépendant de la valeur de la force, du recouvrement de la partie de conduite extérieure (135) avec la partie de conduite intérieure (136) le long des surfaces d'enveloppe.

3. Amortisseur à fluide (100) selon la revendication 1 ou 2,
**caractérisé par**
a. un élément de ressort (140),
b. l'élément de ressort (140) s'opposant à la déviation du cylindre intérieur (116) par rapport au cylindre extérieur (115) de la position de repos,
c. l'élément de ressort (140) précontraignant le cylindre intérieur (116) de préférence par rapport au cylindre extérieur (115) vers la position de repos.

4. Amortisseur à fluide (100) selon l'une des revendications 1 à 3,
**caractérisé en ce que**
a. la rainure (132) pour le passage du fluide d'amortissement présente une surface de section transversale (Q),
b. la surface de section transversale (Q) étant variable sur le trajet de course (HS),
c. la surface de section transversale (Q) étant de préférence plus petite dans les deux zones d'extrémité (HEB, VEB) du trajet de course (HS) que dans une zone centrale (ZB) du trajet de course (HS) située entre les deux zones d'extrémité (HEB, VEB).

5. Amortisseur à fluide (100) selon la revendication 4,
**caractérisé en ce que**
a. la rainure (132) a une largeur (b) dans une direction circonférentielle autour de l'axe longitudinal (LA),
b. la largeur (b) étant variable sur le trajet de course (HS),
c. la largeur (b) étant de préférence plus petite dans les deux zones d'extrémité (HEB, VEB) du trajet de course (HS) que dans la zone centrale (ZB) du trajet de course (HS).

6. Amortisseur à fluide (100) selon la revendication 5,
**caractérisé en ce que**
a. la rainure (132) s'enroule en hélice autour de l'axe longitudinal (LA),
b. une pente de la rainure (130) le long de l'axe longitudinal (LA) étant variable sur le trajet de course (HS),
c. la pente de la rainure (130) étant de préférence plus grande dans les deux zones d'extrémité (HEB, VEB) du trajet de course (HS) que dans la zone centrale (ZB) du trajet de course (HS).

7. Amortisseur à fluide (100) selon la revendication 6,
**caractérisé en ce que**
a. la rainure (132) a une hauteur (h) le long d'une direction de déviation de la déviation du cylindre intérieur (116) à de la position de repos,
b. la hauteur (h) étant constante sur le trajet de course (HS).

8. Limiteur de force pour une ceinture de sécurité,
**caractérisé par**
un amortisseur à fluide (100) selon l'une des revendications 1 à 7 pour moduler une force de retenue de la ceinture de sécurité.
